# FASCICULE DE BREVET EUROPEEN

(11) **EP 3 246 250 B1**
(45) Date de publication et mention de la délivrance du brevet: **28.11.2018**
(21) Numéro de dépôt: 17165044.3
(22) Date de dépôt: 05.04.2017
(51) Int. Cl.: B64C 27/48

(54) **PALE MONOLITHIQUE, ROTOR DE GIRAVION ÉQUIPÉ D'UNE TELLE PALE MONOLITHIQUE ET GIRAVION ASSOCIÉ**
MONOLITHISCHES ROTORBLATT, ROTOR EINES DREHFLÜGELFLUGZEUGS, DAS MIT EINEM SOLCHEN MONOLITHISCHEN ROTORBLATT AUSGESTATTET IST, UND ENTSPRECHENDES DREHFLÜGELFLUGZEUG
A MONOLITHIC BLADE, A ROTORCRAFT ROTOR FITTED WITH SUCH A MONOLITHIC BLADE, AND AN ASSOCIATED ROTORCRAFT

(30) Priorité: 17.05.2016 FR 1600782
(43) Date de publication de la demande: 22.11.2017
(73) Titulaire: Airbus Helicopters, 13725 Marignane Cedex (FR)
(72) Inventeur: AMARI, André, 60520 LA CHAPELLE EN SERVAL (FR); GAFFIERO, Jacques, 75017 PARIS (FR)
(74) Mandataire: GPI & Associés

(56) Documents cités:
- EP-A2- 0 034 210
- DE-A1- 2 712 706
- FR-A1- 2 616 409
- FR-A1- 2 984 849

## Description

La présente invention se rapporte au domaine aéronautique et plus particulièrement à la fabrication de pales monolithiques destinées à former un rotor d'aéronef à voilure tournante, un rotor muni d'au moins deux pales de ce type et un aéronef à voilure tournante équipé d'un tel rotor.

En effet, un aéronef à voilure tournante tel un giravion comporte en général au moins un rotor de sustentation voire de propulsion. Un tel rotor de sustentation comporte alors un moyeu central avec lequel des pales sont solidarisées et agencées sensiblement radialement par rapport à un axe de rotation de ce moyeu.

Ces pales peuvent dans certains cas être solidarisées avec des manchons agencés à l'interface avec un moyeu central. Dans ce cas, ces pales ne sont alors pas directement solidarisées à un moyeu central.

Les pales monolithiques sont quant à elles formées respectivement chacune par une pièce monobloc reliée directement avec le moyeu central d'un rotor. Un tel type de rotor comportant des pales monolithiques présente ainsi un nombre réduit de pièces et est généralement plus léger qu'un rotor comportant à la fois des pales non monolithiques et des manchons rapportés sur un moyeu central.

Ce type de rotor équipé de pales monolithiques peut alors comporter des butées lamifiées pour articuler directement chaque pale monolithique par rapport au moyeu selon un axe de battement, un axe de traînée et un axe de variation de pas. Un tel type de rotor a notamment été décrit par la demanderesse dans le document FR 2 984 849.

Cependant dans ce cas, une butée sphérique lamifiée sert à la fois à articuler une pale monolithique par rapport au moyeu et à jouer, au moins partiellement, le rôle d'amortisseur de traînée pour par exemple éviter les phénomènes de résonance sol et air. Un tel amortisseur de traînée permet d'amortir les oscillations de chaque pale par rapport au moyeu autour de son axe de traînée.

Des telles butées sphériques lamifiées sont donc à la fois soumises à des efforts de compression radiaux générés par la force centrifuge du rotor lors de sa rotation et des efforts de cisaillement vibratoires lors des oscillations de la pale selon l'axe de battement, l'axe de traînée et l'axe de variation de pas. La combinaison de ces efforts de compression et de cisaillement rend ainsi la conception de ces butées sphériques lamifiées très complexe et la réalisation difficile, ce qui nécessite d'adapter en conséquence le dimensionnement de ces butées sphériques lamifiées pour supporter ces différentes sollicitations. Il en résulte qu'un rotor équipé de telles pales et de telles butées sphériques lamifiées est alourdi et complexe à fabriquer.

Par ailleurs tel que décrit dans les documents EP 0 034 210 A2 et DE 27 12 706 A1, il est connu des pales de giravion comportant respectivement chacune un évidement apte à recevoir une butée sphérique lamifiée et un organe supplémentaire de liaison rapporté au niveau d'une extrémité de ces pales.

Le document FR 2 616 409 A1 décrit quant à lui une pale de rotor arrière comportant une zone d'emplanture munie d'un évidement, cette zone d'emplanture étant souple en torsion et en flexion.

Ces différents exemples de pales sont cependant complexes à réaliser et nécessitent l'ajout d'organes supplémentaires de liaison. Les rotors ainsi formés ont donc une masse importante.

La présente invention a alors pour objet de proposer des pales monolithiques présentant une forme particulière et un rotor associé permettant de s'affranchir des limitations mentionnées ci-dessus. Elle y parvient notamment grâce à une nouvelle conception d'une pale monolithique permettant d'utiliser des butées sphériques lamifiées réalisant uniquement la fonction d'articulation selon une liaison de type rotule entre la pale et le moyeu du rotor. Ce type de pale monolithique permet alors de simplifier sa liaison avec le moyeu d'un rotor de giravion et par conséquent de réduire la masse d'un tel rotor.

L'invention concerne donc une pale monolithique d'un rotor de giravion. Une telle pale comporte classiquement une zone aérodynamiquement profilée, dite zone profilée par la suite, comportant une face d'extrados et une face d'intrados, c'est-à-dire dont les contours des sections sont des profils aérodynamiques constitués par un extrados et un intrados.

Une telle pale comporte également une zone d'emplanture comportant un évidement débouchant de part et d'autre d'une portion rigide de la zone d'emplanture de la pale entre une première face et une deuxième face prolongeant respectivement la face d'intrados et la face d'extrados de la zone profilée de la pale vers une extrémité d'emplanture de la pale, un tel évidement étant apte à recevoir une butée sphérique lamifiée.

Selon l'invention, la pale est remarquable en ce que la zone d'emplanture comporte :
- un doigt à portée sphérique agencé au niveau de l'extrémité d'emplanture de la pale, un tel doigt étant destiné à coopérer selon une liaison de type linéaire annulaire avec un alésage cylindrique, et
- une portion souple comportant une direction de déformation en flexion privilégiée suivant un axe de battement de la pale, ladite portion souple étant agencée entre ledit doigt et ledit évidement apte à recevoir ladite butée sphérique lamifiée.

Autrement dit, une telle pale, formant un ensemble monobloc, est destinée à être directement solidarisée avec le moyeu d'un rotor de giravion par l'intermédiaire d'une butée sphérique lamifiée insérée dans l'évidement débouchant de l'emplanture de cette pale. Compte tenu de sa conception particulière, une telle pale monolithique peut par ailleurs coopérer directement avec un amortisseur de traînée annexe et indépendant de la butée sphérique lamifiée. Un tel amortisseur de traînée est alors conçu spécifiquement pour coopérer avec le doigt à portée sphérique agencé au niveau de l'extrémité d'emplanture de la pale. Cette extrémité d'emplanture de la pale est destinée à être positionnée la plus proche de l'axe de rotation du rotor.

Par suite une telle pale monolithique comporte une zone d'emplanture destinée à coopérer avec un moyeu central et une zone profilée. La forme particulière de la zone d'emplanture de cette pale permet alors de simplifier la conception des butées sphériques lamifiées et d'en réduire ainsi les dimensions et la masse associée en raison d'une part d'aucune contribution à une quelconque fonction d'amortissement du mouvement des pales et d'autre part de la suppression de lourdes masses battantes telles qu'un manchon et les pièces associées de fixation notamment. En effet, ces masses battantes à forte inertie induisent des charges dynamiques importantes et des niveaux vibratoires élevés entrainant un surdimensionnement des butées sphériques lamifiées.

En outre, la portion souple de la pale suivant une direction de déformation privilégiée en battement peut quant à elle permettre à cette zone d'emplanture s'étendant depuis le doigt jusqu'au-delà de l'évidement de participer aux mouvements de battement de ladite pale.

La liaison de type linéaire annulaire entre le doigt à portée sphérique de la pale et l'alésage cylindrique de l'amortisseur de traînée permet par ailleurs de conférer quatre degrés de liberté entre le doigt et l'alésage. Ces quatre degrés de liberté peuvent se décomposer en trois rotations selon trois axes formant un repère orthonormé et une translation suivant une direction parallèle à l'envergure de la pale autorisant les mouvements de battement et de trainée d'une pale et sa mise en pas.

Avantageusement, l'évidement peut être agencé au niveau d'un rétrécissement des cordes de la pale dans la zone d'emplanture, un tel rétrécissement correspondant à une diminution de la corde de la pale par rapport à la corde de la zone profilée de la pale.

En d'autres termes, la corde de la zone d'emplanture au niveau de l'évidement permettant de recevoir la butée lamifiée est inférieure à la corde de la zone profilée de la pale.

En pratique, la portion souple peut comporter en tout ou partie une forme de plaque.

Par suite, une telle portion souple comporte une section transversale, c'est-à-dire sensiblement perpendiculaire à l'axe de pas de la pale, présentant une épaisseur constante par opposition à l'épaisseur de la pale au niveau de la zone profilée, l'épaisseur étant exprimée perpendiculairement à la corde des sections de la zone d'emplanture ou à la corde des profils aérodynamiques selon la zone concernée. Une telle épaisseur au niveau de la portion souple est par ailleurs inférieure à l'épaisseur maximale de la pale mesurée au niveau de la zone profilée. En outre, une telle portion souple de la pale peut comporter plusieurs sections transversales présentant des épaisseurs différentes.

Par exemple, la portion souple peut comporter en tout ou partie une première forme de plaque comportant une première épaisseur prédéterminée et une seconde forme de plaque comportant une seconde épaisseur prédéterminée. La première forme de plaque est alors solidaire du doigt à portée sphérique tandis que la seconde forme de plaque est agencée à proximité de l'évidement. La première forme de plaque est par ailleurs en continuité de manière coplanaire avec la seconde forme de plaque.

Les première et seconde épaisseurs prédéterminées sont donc avantageusement choisies différentes l'une de l'autre. Par exemple, la première épaisseur prédéterminée de la première forme de plaque peut alors être choisie inférieure à la seconde épaisseur prédéterminée de la seconde forme de plaque. La première épaisseur prédéterminée de la première forme de plaque peut être de l'ordre de 10 à 20 mm et la seconde épaisseur prédéterminée de la seconde forme de plaque peut être de l'ordre de 20 à 40mm.

Selon une autre réalisation conforme à l'invention, la portion souple de la pale peut comporter une pluralité de sections transversales présentant une épaisseur variant progressivement depuis une épaisseur minimale e1' vers une épaisseur maximale e2' suivant le sens de l'envergure de la pale.

De manière avantageuse, la portion souple peut être agencée symétriquement de part et d'autre d'un plan médian de la zone d'emplanture de la pale.

De cette manière, la portion souple s'étend de façon symétrique par rapport au plan médian passant par le centre du doigt à portée sphérique et par le centre de la butée sphérique lamifiée. Dans un cas particulier, un tel plan médian peut être sensiblement perpendiculaire à l'axe de rotation d'un rotor comportant plusieurs pales.

Selon un premier exemple de réalisation, la portion souple peut comporter au moins localement une section transversale en forme de I, le plan médian définissant un axe de symétrie de l'âme centrale de cette section, une telle portion souple comportant deux bordures de part et d'autre de l'âme centrale formant des excroissances symétriques de part et d'autre du plan médian de la zone d'emplanture de la pale.

Une telle forme de section transversale en I est ainsi optimale pour garantir à la fois une faible masse de la portion souple et une raideur en traînée supérieure à la raideur en battement. Par ailleurs, une telle forme en I peut notamment être réalisée lorsque la portion souple de la pale est obtenue par un procédé de moulage d'un matériau thermoplastique.

Selon un second exemple de réalisation, la portion souple peut comporter au moins localement une section transversale de forme rectangulaire agencée symétriquement par rapport au plan médian de la zone d'emplanture de la pale.

Une telle forme rectangulaire de section transversale est quant à elle plus simple à réaliser qu'une forme de section transversale en I et peut par exemple être réalisée avec des matériaux composites stratifiés obtenus par la superposition de nappes textiles comprenant des fibres de renfort, telles que notamment des fibres de verre, de carbone et d'aramide, préimprégnées par une matrice telle qu'une résine époxy par exemple, ces fibres étant judicieusement orientées. En effet, l'orientation préférentielle des fibres leur confère des propriétés d'anisotropie permettant d'ajuster les caractéristiques de module, donc de rigidité et de résistance dans la direction désirée.

Avantageusement, la zone emplanture de la pale peut être formée dans au moins un matériau composite choisi notamment parmi le groupe comportant les polymères époxydes, les résines époxydes, les résines époxydes chargées en fibres de renfort, des mats textiles à base de fibres de renfort puis noyées dans une matrice époxyde et des nappes textiles tissées, tricotées ou tressées à base de fibres de renfort puis noyées dans une matrice époxyde.

Ces matériaux composites ont, par rapport aux matériaux métalliques, de meilleures caractéristiques mécaniques spécifiques, c'est-à-dire rapportées à leur masse volumique, telles que par exemple des résistances à la rupture en statique et en fatigue ainsi qu'à propos des modules sachant par ailleurs que le module d'Young des métaux peut être égalé par certains de ces matériaux composites.

En d'autres termes, de tels matériaux sont bien adaptés pour la fabrication des pales de rotor de giravion dont la masse doit être la plus faible possible. En effet, ces matériaux présentent comme vu précédemment un module spécifique élevé donc une faible masse volumique pour un module d'élasticité ou module d'Young maximal. Il est notamment possible d'obtenir un module d'Young supérieur ou égal à 70000 Mpa pour une masse volumique inférieure à 2000 kg/m³.

En pratique, la portion rigide de la zone d'emplanture de la pale peut comporter une sangle "roving" noyée à l'intérieur du ou des matériaux formant en tout ou partie la pale, la sangle roving formant une boucle pour former au moins une portion de la périphérie de l'évidement de la pale, cette boucle se prolongeant par deux portions rectilignes disposées respectivement de part et d'autre de l'évidement puis dans la zone profilée de la pale jusqu'à l'extrémité externe, dite encore extrémité libre, de la pale, c'est à dire l'extrémité destinée à être positionnée la plus éloignée de l'axe de rotation du rotor.

Plus précisément, la sangle roving, adhérant aux matériaux composites formant la pale et la portion rigide de la zone d'emplanture, constitue un longeron qui permet de transmettre à la butée sphérique lamifiée la force centrifuge générée par la rotation de la pale correspondante. Il s'agit d'un élément résistant essentiel qui permet de renforcer simultanément la pale et la portion rigide de la zone d'emplanture comprenant l'évidement.

Une telle sangle roving se présente notamment soit sous la forme d'écheveaux soit sous la forme de rovings, chacune de ses formes étant par exemple à base de fibres de verre R imprégnées dans une matrice de type résine thermoplastique ou thermodurcissable. La réalisation de cette sangle roving est soit manuelle, soit mécanisée et consiste à déposer par empilement des rubans de roving sur des mandrins outillage ou remplissages de la pale puis après complément de constitution de la pale, effectuer une phase de polymérisation de l'ensemble par application d'un cycle de chauffage.

La présente invention a aussi pour objet un rotor de giravion comportant au moins deux pales monolithiques, un moyeu permettant d'entrainer en rotation les au moins deux pales autour d'un axe de rotation du rotor et au moins deux butées sphériques lamifiées formant respectivement chacune une liaison de type rotule entre chaque pale et le moyeu.

Un tel rotor de giravion est remarquable en ce que les au moins deux pales sont telles que décrites précédemment.

Un tel rotor comporte ainsi une pluralité de pales telles que décrites ci-dessus permettant d'utiliser des butées sphériques lamifiées spécifiques moins chargées et de diminuer le nombre de masses battantes d'où une réduction de masse et un meilleur niveau vibratoire.

Avantageusement, le rotor peut comporter au moins un amortisseur de traînée solidarisé en liaison de type encastrement avec le moyeu, chaque doigt à portée sphérique des au moins deux pales coopérant selon une liaison de type linéaire annulaire avec un alésage cylindrique correspondant ménagé dans l'amortisseur de traînée.

Un tel amortisseur de traînée est alors agencé à proximité de l'axe de rotation du rotor. L'alésage cylindrique coopérant avec le doigt est quant à lui agencé sensiblement radialement par rapport à l'axe de rotation du rotor pour permettre de réaliser une liaison de type linéaire annulaire avec ce doigt.

Selon une première variante de l'invention, le (ou les) amortisseur(s) de traînée peut (peuvent) être composé(s) d'une pluralité d'organes disjoints, disposés circonférentiellement autour de l'axe de rotation du moyeu, et comportant chacun un alésage cylindrique coopérant avec chaque doigt à portée sphérique des au moins deux pales.

Dans ce cas, les différents organes disjoints sont solidarisés indépendamment en liaison de type encastrement avec le moyeu du rotor.

Selon une seconde variante de l'invention, le (ou les) amortisseur(s) de traînée peut (peuvent) être composé(s) par un anneau monolithique, disposé circonférentiellement autour de l'axe de rotation du moyeu, et comportant au moins deux alésages cylindriques coopérant respectivement chacun avec un doigt à portée sphérique des au moins deux pales.

Dans ce cas, l'anneau monolithique coopère avec les différentes pales et comporte ainsi plusieurs alésages cylindriques orientés radialement.

En pratique, le (ou les) amortisseur(s) de traînée peut (peuvent) être de type lamifié(s).

En d'autres termes, de tels amortisseurs de traînée comportent alors une armature intérieure formant les alésages cylindriques, puis de part et d'autre un empilement de couches principales souples intercalées entre des couches secondaires rigides et une armature extérieure recouvrant l'ensemble ainsi formé. Les armatures intérieure et extérieure peuvent être formées dans un matériau métallique, par exemple en alliage d'aluminium ou en acier. Les couches principales souples peuvent quant à elles être formées à partir d'un matériau élastomère de type polyuréthane ou caoutchouc, empilées alternativement avec des couches secondaires rigides par exemple en matériau métallique, par exemple en alliage d'aluminium ou en acier.

L'empilement des couches principales souples et des couches secondaires rigides s'effectue soit selon un axe vertical, soit selon un axe radial. De telles configurations et technologies d'amortisseur élastomériques sont couramment utilisées de nos jours.

Au surplus, l'invention concerne également un giravion comportant un rotor tel que décrit ci-dessus.

Ainsi, l'invention se rapporte à un giravion équipé par exemple d'un rotor principal et/ou d'un rotor anticouple équipé de pales monolithiques telles que précédemment décrites.

L'invention et ses avantages apparaîtront avec plus de détails dans le cadre de la description qui suit avec des exemples donnés à titre illustratif en référence aux figures annexées qui représentent :
- la figure 1, une vue en perspective de dessus d'un giravion conforme à l'invention équipé d'un rotor selon une première variante de l'invention,
- la figure 2, une vue en perspective de dessus d'un rotor selon une seconde variante de l'invention,
- la figure 3, une vue en perspective de dessous du rotor selon la première variante de l'invention,
- la figure 4, une vue en perspective d'une pale selon un second exemple de réalisation, conformément à l'invention,
- la figure 5, une coupe partielle en vue de face de ladite pale selon un second exemple de réalisation,
- la figure 6, une vue en coupe A-A telle qu'indiquée à la figure 5 de ladite pale selon le second exemple de réalisation,
- la figure 7, une coupe en vue de côté d'un rotor de giravion équipé de ladite pale selon le second exemple de réalisation,
- la figure 8, une coupe en vue de côté d'une pale selon une autre réalisation conforme à l'invention,
- la figure 9, une vue en coupe B-B telle qu'indiquée à la figure 7 d'une pale selon un premier exemple de réalisation, et
- les figures 10 et 11, des vues en coupe B-B telles qu'indiquées à la figure 7 de deux alternatives correspondant à ladite pale selon le second exemple de réalisation.

Les éléments présents dans plusieurs figures distinctes peuvent être affectés d'une seule et même référence.

Comme déjà évoqué, l'invention se rapporte au domaine des aéronefs à voilure tournante tels les giravions.

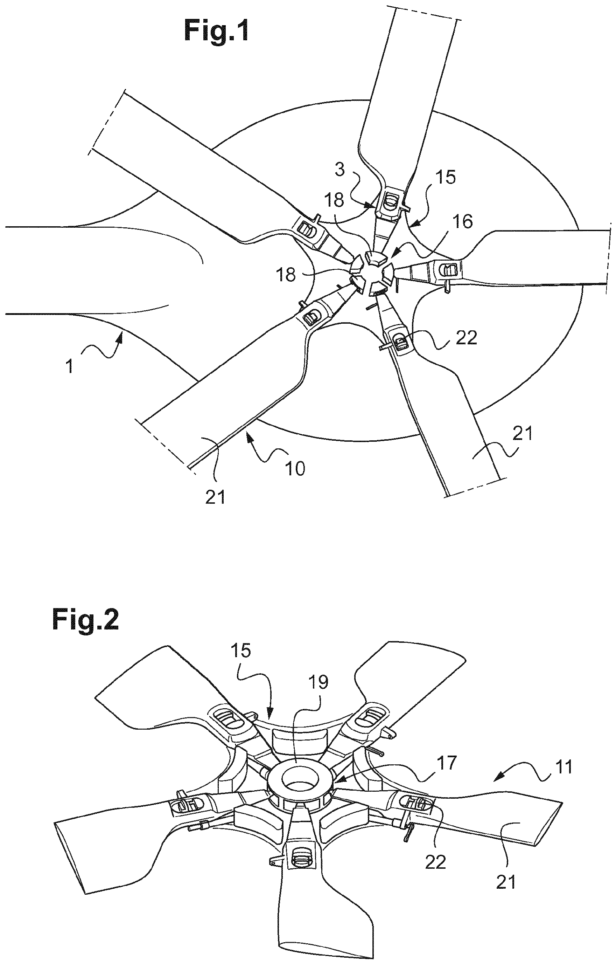

Tel que représenté à la figure 1, un giravion 1 conforme à l'invention est équipé d'un rotor 10 comportant un moyeu 15 et des pales monolithiques 21 liées respectivement chacune avec un tel moyeu 15 par leur zone d'emplanture 3.

Selon une première variante de l'invention, le rotor 10 comporte également un amortisseur de traînée 16 coopérant avec des extrémités des pales 21. L'amortisseur de traînée 16 est solidarisé avec le moyeu 15 selon une liaison de type encastrement et ne comporte donc aucun degré de liberté par rapport à ce moyeu 15.

En outre selon cette première variante de l'invention, l'amortisseur de traînée 16 est composé d'une pluralité d'organes disjoints 18 coopérant chacun individuellement avec l'extrémité d'emplanture d'une pale 21 et notamment avec un doigt tel que décrit par la suite.

Tel que représenté à la figure 2 et selon une deuxième variante de l'invention, un giravion conforme à l'invention peut être équipé d'un rotor 11 comportant un moyeu 15, des pales 21 et un amortisseur de traînée 17 formé par un anneau monolithique 19.

De tels amortisseurs de traînée 16, 17 coopérant avec les extrémités d'emplanture des pales 21 permettent alors d'amortir les oscillations en trainée des pales 21.

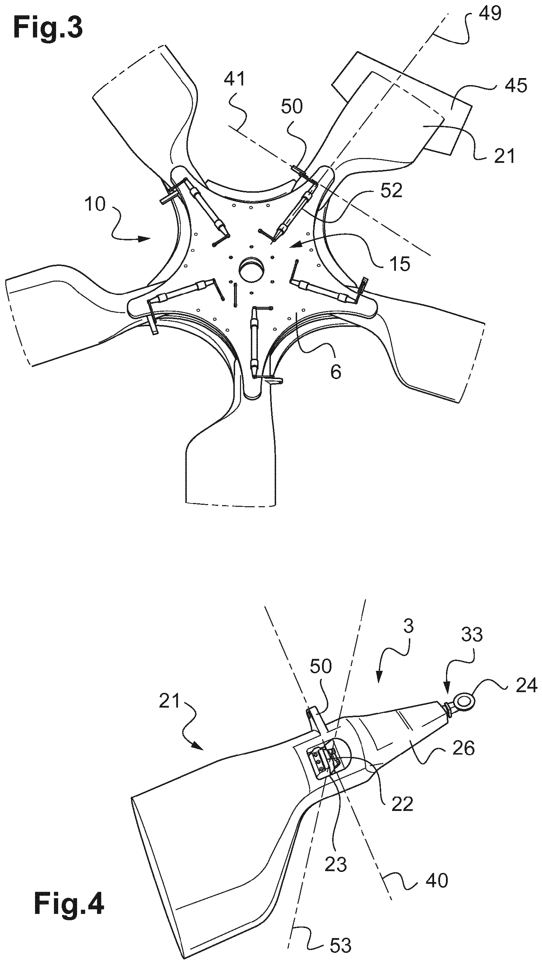

Comme représenté aux figures 3 à 6, un tel rotor 10 peut par exemple comporter au niveau du moyeu 15 des palonniers de renvoi 52 articulés par rapport à un flasque inférieur 6 de ce moyeu 15. De tels palonniers de renvoi 52 peuvent être commandés collectivement ou cycliquement et permettent alors de transmettre un mouvement de rotation en pas aux différentes pales 21 équipées respectivement chacune d'un levier de pas 50, entrainé en rotation par une bielle de liaison 61 liée à un palonnier de renvoi 52, le levier de pas 50 formant une excroissance dans une direction parallèle à une direction transversale 41, elle-même perpendiculaire à une direction longitudinale 49 selon l'envergure de la pale 21. Par ailleurs, la direction transversale 41 forme avec la direction longitudinale 49 un plan médian 45 de symétrie pour tout ou partie de la zone d'emplanture 3 de la pale 21.

Selon la figure 4, la pale 21 comporte au niveau de l'extrémité d'emplanture 33 de la zone d'emplanture 3 un doigt 24 à portée sphérique destiné à coopérer avec l'amortisseur de traînée 16, 17. La zone d'emplanture 3 de la pale 21 comporte également une portion souple 26 et un évidement 23 ménagé dans une portion rigide 64 pour loger une butée sphérique lamifiée 22.

Une telle portion souple 26 est remarquable en ce qu'elle comporte une direction de déformation en flexion privilégiée suivant un axe de battement 40 par rapport à une direction de déformation en flexion suivant un axe de traînée 53. Une telle portion souple 26 est ainsi souple en flexion suivant l'axe de battement 40 mais est par opposition rigide en flexion suivant l'axe de traînée 53.

Avantageusement, le doigt 24 peut être formé dans le même matériau que celui utilisé pour former la portion souple 26 mais un tel doigt 24 peut également être rapporté au niveau de l'extrémité d'emplanture 33 de la pale 21 et être formé dans un autre matériau que celui de la portion souple 26.

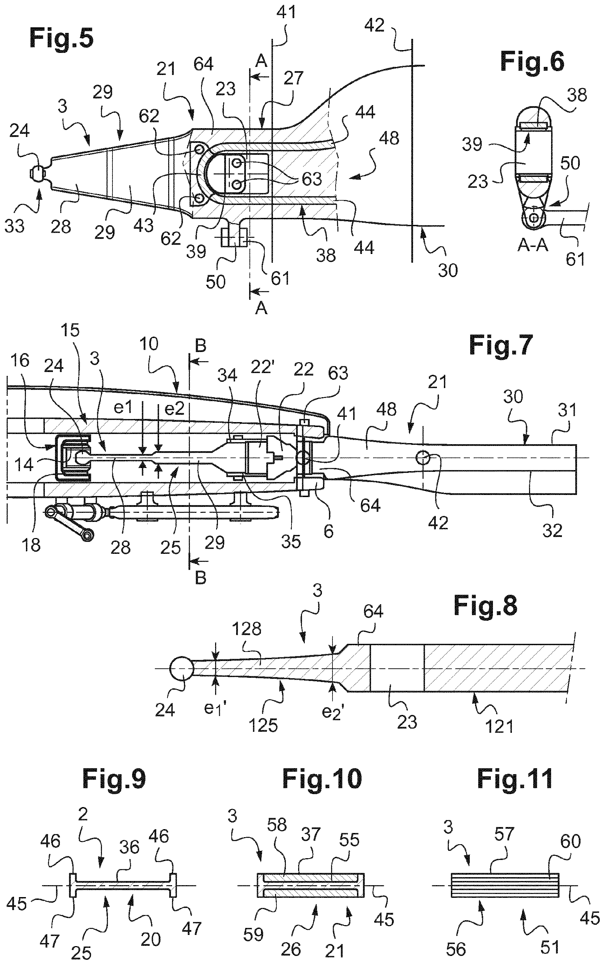

Telle que représentée aux figures 5 et 7, la portion souple 26 de la pale 21 peut comporter une première forme de plaque 28 présentant une première épaisseur prédéterminée e1 et une seconde forme de plaque 29 présentant une seconde épaisseur prédéterminée e2.

La première forme de plaque 28 est solidaire du doigt 24 à portée sphérique tandis que la seconde forme de plaque 29 est agencée à proximité de l'évidement 23. La première forme de plaque 28 est par ailleurs en continuité de manière coplanaire avec la seconde forme de plaque 29.

Selon une autre réalisation conforme à l'invention telle que représentée à la figure 8, la portion souple 125 de la pale 121 peut également comporter une forme de plaque 128 dont l'épaisseur de la section transversale varie de façon continue entre une épaisseur minimale e1' et une épaisseur maximale e2' suivant le sens de l'envergure de la pale 121. L'épaisseur de la section transversale peut ainsi croître de manière continue le long de la portion souple 125 entre le doigt 24 et la portion rigide 64 comprenant l'évidemment 23 de la zone d'emplanture 3.

Telle que représentée à la figure 5, la pale 21 comporte un rétrécissement 27 agencé au niveau d'une direction transversale 41 distante et parallèle par rapport à une direction transversale 42 des sections au niveau d'une zone 30 de la pale 21 présentant une forme aérodynamiquement profilée, dite zone profilée 30 comme vu précédemment.

Tel que représenté à la figure 7, au niveau du rétrécissement 27 se trouve l'évidement 23 débouchant de part et d'autre de la portion rigide 64 de la zone d'emplanture 3 de la pale 21 entre une première face 34 prolongeant une face d'extrados 31 de la zone profilée 30 et une deuxième face 35 prolongeant une face d'intrados 32 de la zone profilée 30.

Selon les figures 5 et 6, la pale 21 comporte également une sangle roving 38 noyée dans les matériaux formant la pale 21. Une telle sangle roving 38 se présente donc sous la forme d'écheveaux ou sous la forme de rovings, chacune de ses formes étant par exemple à base de fibre de verre R.

La sangle "roving" 38 permet d'entourer au moins partiellement la périphérie 39 de l'évidement 23 avec une portion courbe 43 et deux portions rectilignes 44 de part et d'autre de l'évidement 23 se prolongeant dans la zone profilée 30 jusqu'à l'extrémité libre de la pale 21. Cette sangle "roving" 38 permet ainsi de former le longeron de la pale 21 et par suite garantit la tenue mécanique d'une pale 21 sollicitée par une force centrifuge importante lors de la rotation du rotor 10.

En outre, tel que représenté à la figure 7, le moyeu 15 comporte un flasque inférieur 6 et un flasque supérieur 5 solidarisés d'une part avec les butées sphériques lamifiées 22 et d'autre part avec l'amortisseur de traînée 16.

La liaison entre le flasque inférieur 6, le flasque supérieur 5 et les butées sphériques lamifiées 22 est de type encastrement et comporte par exemple des organes de serrage 63 tels que des vis, boulons ou analogues. De même la liaison entre la pale 21 et la butée sphérique lamifiée 22 est de type encastrement et peut comporter une pièce de liaison 22' rapportée à l'intérieur de l'évidement 23 et solidarisée avec la pale 21 par des organes de serrage 62 tels que des vis, boulons ou analogues. Une telle pièce de liaison 22' permet alors de former une excroissance interne à l'évidement 23 avec laquelle la butée sphérique lamifiée 22 peut être solidaire selon une liaison mécanique de type encastrement obtenu par exemple par un procédé de collage.

Par ailleurs comme déjà indiqué, un tel amortisseur de traînée 16 peut comporter plusieurs organes disjoints 18 comportant chacun un alésage cylindrique 14 coopérant selon une liaison de type linéaire annulaire avec le doigt 24.

Telle que représentée, la portion souple 26 de la pale 21 est agencée symétriquement de part et d'autre du plan médian 45. Cependant, une telle portion souple 26 peut comporter différentes formes de sections transversales.

Ainsi, selon un premier exemple de réalisation représenté à la figure 9, la zone d'emplanture 2 de la pale 20 présente une portion souple 25 qui comporte une section transversale 36 en forme de I. Dans ce cas, la portion souple 25 comporte deux bordures 46, 47 formant des excroissances symétriques de part et d'autre du plan médian 45.

Selon les figures 10 et 11 et selon un second exemple de réalisation, la zone d'emplanture 3 de la pale 21, 51 comporte une portion souple 26, 56 présentant une section transversale 37, 57 de forme rectangulaire.

Une première alternative est illustrée à la figure 10. Dans ce cas, la section transversale 37 de la portion souple 26 de la pale 21 comporte une structure interne 55 en forme de I, assurant la résistance de cette portion souple 26 et des couches de remplissage 58, 59 disposées symétriquement de part et d'autre du plan médian 45. De telles couches de remplissage 58, 59 peuvent être ainsi réalisées dans un matériau distinct de celui utilisé pour former la structure interne 55 en forme de I.

Par exemple la structure interne 55 peut être réalisée par un empilement de rovings de verre ou de carbone dont les fibres sont orientées parallèlement à la direction longitudinale 49 de la pale 21. Les couches de remplissages 58 et 59 peuvent être réalisées par des empilements de tissus de verre ou de carbone orientés de façon équilibrée à plus ou moins 45 degrés par rapport à la direction longitudinale 49 de la pale 21. L'ensemble formé par la structure interne 55 et les couches de remplissage 58, 59 est recouvert d'un revêtement à base de tissus sergés constitués de fibres de verre R équilibrés dans le sens chaine et dans le sens trame.

Une seconde alternative est illustrée à la figure 11. Dans ce cas, la section transversale 57 de la portion souple 56 de la pale 51 peut être formée par la superposition de nappes textiles 60. La portion souple 56 est alors formée par des matériaux composites stratifiés pour former une pluralité de nappes textiles 60 noyées dans une matrice. Par exemple, les nappes textiles 60 permettent de former un empilement de tissus de verre orientés de façon équilibrée à plus ou moins 45 degrés par rapport à la direction longitudinale 49 (envergure) de la pale 51.

Dans ces conditions, la transition relative aux matériaux dans la zone d'emplanture 2, 3 de la pale 20, 21, 51 est précisée ci-après. La transition entre le doigt 24, qui peut être métallique, et la première forme de plaque 28 est assurée, par exemple, par des vis implantées dans des inserts métalliques taraudés disposés dans l'épaisseur de la portion souple 26.

Dans une autre configuration de l'invention dans laquelle le doigt 24 est formé dans un matériau composite, la liaison avec la portion souple 28 peut être assurée par un prolongement des fibres de renfort constitutives de la portion souple 28 en étant éventuellement complétées par des fibres de renfort supplémentaires positionnées à proximité du doigt 24 à portée sphérique.

Par ailleurs, la transition des matériaux entre la seconde forme de plaque 28, 29 et la portion rigide 64 de la zone d'emplanture 2, 3 de pale 20, 21, 51 peut être assurée en surface par un prolongement des tissus de renforts de la zone d'emplanture 2, 3 de la pale 20, 21, 51. De même à coeur, des fibres de renforts unidirectionnelles peuvent être disposées contre la sangle roving 38 au niveau de la portion rigide 64.

Enfin, la transition des matériaux entre la portion rigide 64 et la zone profilée 30 de la pale 20, 21, 51 est réalisée de façon à assurer une continuité des fibres de renfort agencées au niveau du rétrécissement 27 entre d'une part la sangle roving 38 et d'autre part des renforts de la zone d'emplanture 2, 3. Les deux portions rectilignes 44 de la sangle roving 38 sont disposées de part et d'autre de l'évidement 23 et se prolongent jusqu'en partie courante 48 de la pale 21. Les tissus de renforts de surface issus de la partie courante 48 de la pale sont par exemple partiellement coupés et repliés à l'intérieur de l'évidement 23 afin d'assurer un meilleur accrochage des tissus de bordure de l'évidement 23.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Pale (20, 21, 51, 121) monolithique d'un rotor (10, 11) de giravion (1), ladite pale (20, 21, 51, 121) comportant :
• au moins localement une zone profilée (30) comportant une face d'intrados (32) et une face d'extrados (31),
• une zone d'emplanture (2, 3) comportant un évidement (23) débouchant de part et d'autre d'une portion rigide (64) de la pale (20, 21, 51, 121) entre une première face (34) et une deuxième face (35) prolongeant respectivement ladite face d'extrados (31) et ladite face d'intrados (32) de ladite zone profilée (30) vers une extrémité d'emplanture (33) de ladite pale (20, 21, 51, 121), ledit évidement (23) étant apte à recevoir une butée sphérique lamifiée (22),
**caractérisée en ce que** ladite zone d'emplanture (2, 3) de ladite pale (20, 21, 51, 121) comporte :
• un doigt (24) à portée sphérique agencé au niveau de ladite extrémité d'emplanture (33) de ladite pale (20, 21, 51, 121), ledit doigt (24) étant destiné à coopérer selon une liaison de type linéaire annulaire avec un alésage cylindrique (14), et
• une portion souple (25, 26, 56, 125) comportant une direction de déformation en flexion privilégiée suivant un axe de battement (40) de ladite pale (20, 21, 51, 121), ladite portion souple (25, 26, 56, 125) étant agencée entre ledit doigt (24) et ledit évidement (23) apte à recevoir ladite butée sphérique lamifiée (22).

2. Pale selon la revendication 1,
**caractérisée en ce que** ledit évidement (23) est agencé au niveau d'un rétrécissement (27) d'une corde de ladite pale (20, 21, 51, 121) dans ladite zone d'emplanture (2, 3), ledit rétrécissement (27) correspondant à une diminution de la corde de ladite pale (20, 21, 51, 121) par rapport à la corde de la zone profilée (30) de ladite pale (20, 21, 51, 121).

3. Pale selon l'une quelconque des revendications 1 à 2,
**caractérisée en ce que** ladite portion souple (25, 26, 125) comporte en tout ou partie une forme de plaque (28, 29, 128).

4. Pale selon la revendication 3,
**caractérisée en ce que** ladite portion souple (25, 26) comporte en tout ou partie une première forme de plaque (28) comportant une première épaisseur prédéterminée e1 et une seconde forme de plaque (29) comportant une seconde épaisseur prédéterminée e2, ladite première forme de plaque (28) étant solidaire dudit doigt (24) à portée sphérique, ladite seconde forme de plaque (29) étant agencée à proximité dudit évidement (23), ladite première forme de plaque (28) étant juxtaposée de manière coplanaire avec ladite seconde forme de plaque (29).

5. Pale selon la revendication 3,
**caractérisée en ce que** la portion souple (125) comporte une pluralité de sections transversales présentant une épaisseur variant progressivement depuis une épaisseur minimale e1' vers une épaisseur maximale e2' suivant le sens de l'envergure de la pale (121).

6. Pale selon l'une quelconque des revendications 1 à 5,
**caractérisée en ce que** ladite portion souple (25, 26, 56, 125) est agencée symétriquement de part et d'autre d'un plan médian (45) pour ladite zone d'emplanture (2, 3) de ladite pale (20, 21, 51, 121).

7. Pale (20) selon la revendication 6,
**caractérisée en ce que** ladite portion souple (25) comporte au moins localement une section transversale (36) en forme de I et comporte deux bordures (46, 47) formant des excroissances symétriques de part et d'autre dudit plan médian (45) de ladite zone d'emplanture (2) de ladite pale (20).

8. Pale (21, 51) selon la revendication 6,
**caractérisée en ce que** ladite portion souple (26, 56) comporte au moins localement une section transversale (37, 57) de forme rectangulaire agencée symétriquement par rapport audit plan médian (45) de ladite zone d'emplanture (3) de de ladite pale (21, 51).

9. Pale selon l'une quelconque des revendications 1 à 8,
**caractérisée en ce qu'**au moins ladite zone emplanture (2, 3) de ladite pale (20, 21, 51, 121) est formée dans au moins un matériau composite choisi parmi le groupe comportant les polymères époxydes, les résines époxydes, les résines époxydes chargées en fibres de renfort, des mats textiles à base de fibres de renfort puis noyées dans une matrice époxyde et des nappes textiles tissés, tricotés ou tressés à base de fibres de renfort puis noyées dans une matrice époxyde.

10. Pale selon l'une quelconque des revendications 1 à 9,
**caractérisée en ce que** ladite portion rigide (64) de la zone d'emplanture (3) de la ladite pale (20, 21, 51, 121) comporte une sangle "roving" (38) noyée à l'intérieur d'au moins un matériau formant en tout ou partie ladite pale (20, 21, 51, 121), ladite sangle roving (38) formant une boucle pour former au moins une portion de la périphérie (39) dudit évidement (23) de ladite pale (20, 21, 51, 121) comprenant une portion courbe (43) et deux portions rectilignes (44) de part et d'autre de l'évidement (23), une telle boucle se prolongeant depuis ledit évidement (23) dans ladite zone profilée (30) de ladite pale (20, 21, 51, 121) jusqu'à son extrémité libre.

11. Rotor (10, 11) de giravion (1) comportant au moins deux pales (20, 21, 51, 121) monolithiques, un moyeu (15) permettant d'entrainer en rotation lesdites au moins deux pales (20, 21, 51, 121) autour d'un axe de rotation (12) dudit rotor (10, 11) et au moins deux butées sphériques lamifiées (22) formant respectivement chacune une liaison de type rotule entre chaque pale (20, 21, 51, 121) et ledit moyeu (15),
**caractérisé en ce que** lesdites au moins deux pales (20, 21, 51, 121) sont selon l'une quelconque des revendications 1 à 10.

12. Rotor selon la revendication 11,
**caractérisé en ce que** ledit rotor (10, 11) comporte au moins un amortisseur de traînée (16, 17) solidarisé en liaison de type encastrement avec ledit moyeu (15), chaque doigt (24) à portée sphérique desdites au moins deux pales (20, 21, 51, 121) coopérant selon une liaison de type linéaire annulaire avec un alésage cylindrique (14) ménagé dans ledit amortisseur de traînée (16, 17).

13. Rotor (10) selon la revendication 12,
**caractérisé en ce que** ledit au moins un amortisseur de traînée (16) est composé d'une pluralité d'organes disjoints (18) comportant chacun un alésage cylindrique (14) coopérant avec chaque doigt (24) à portée sphérique desdites au moins deux pales (20, 21,51,121).

14. Rotor (11) selon la revendication 12,
**caractérisé en ce que** ledit au moins un amortisseur de traînée (17) est formé par un anneau monolithique (19) comportant au moins deux alésages cylindriques (14) coopérant respectivement chacun avec un doigt (24) à portée sphérique desdites au moins deux pales (20, 21, 51, 121).

15. Rotor (10, 11) selon l'une quelconque des revendications 12 à 14,
**caractérisé en ce que** ledit au moins un amortisseur de traînée (16, 17) est de type lamifié.

16. Giravion (1),
**caractérisé en ce qu'**il comporte un rotor (10) selon l'une quelconque des revendications 11 à 15.

## Patentansprüche

1. Monolithisches Blatt (20, 21, 51, 121) eines Rotors (10, 11) eines Drehflügelflugzeugs (1), wobei das Blatt (20, 21, 51, 121) umfasst:
mindestens lokal eine profilierte Zone (30), die eine innere Wölbungsfläche (32) und eine äußere Wölbungsfläche (31) umfasst,
eine Wurzelzone (2, 3), die eine Aussparung (23) umfasst, die sich auf beiden Seiten eines starren Abschnitts (64) des Blattes (20, 21, 51, 121) zwischen einer ersten Fläche (34) und einer zweiten Fläche (35) öffnet, die jeweils die äußere Wölbungsfläche (31) und die innere Wölbungsfläche (32) des Profilbereichs (30) zu einem Wurzelende (33) der Schaufel (20, 21, 51, 121) verlängert,
wobei die Aussparung (23) zur Aufnahme eines geschichteten sphärischen Anschlags (22) ausgebildet ist,
**dadurch gekennzeichnet, dass** die Wurzelzone (2, 3) des Blattes (20, 21, 51, 121) umfasst:
einen Finger (24) mit einer sphärischen Lagerfläche, der an dem Wurzelende (33) des Blattes (20, 21, 51, 121) angeordnet ist, wobei der Finger (24) vorgesehen ist, in einer ringförmigen linearen Verbindung mit einer zylindrischen Bohrung (14) zusammenzuwirken, und
einen flexiblen Abschnitt (25, 26, 56, 125), der eine bevorzugte Biegeverformungsrichtung entlang einer Schlagachse (40) des Blattes (20, 21, 51, 121) aufweist, wobei der flexible Abschnitt (25, 26, 56, 125) zwischen dem Finger (24) und der Aussparung (23) angeordnet und zum Aufnehmen des geschichteten Anschlags (22) ausgebildet ist.

2. Blatt nach Anspruch 1, **dadurch gekennzeichnet, dass** die Aussparung (23) an einer Verengung (27) einer Sehne des Blattes (20, 21, 51, 121) in der Wurzelzone (2, 3) angeordnet ist, wobei die Verengung (27) einer Verkürzung der Sehne des Blattes (20, 21, 51, 121) in Bezug auf die Sehne der profilierten Zone (30) des Blattes (20, 21, 51, 121) entspricht.

3. Blatt nach einem der Ansprüche 1 bis 2, **dadurch gekennzeichnet, dass** der flexible Abschnitt (25, 26, 125) ganz oder teilweise die Form einer Platte (28, 29, 128) aufweist.

4. Blatt nach Anspruch 3, **dadurch gekennzeichnet, dass** der flexible Abschnitt (25, 26) ganz oder teilweise eine erste Plattenform (28) mit einer ersten vorbestimmten Dicke e1 und eine zweite Plattenform (29) mit einer zweiten vorbestimmten Dicke e2 umfasst,
wobei die erste Plattenform (28) mit dem Finger (24) mit sphärischer Lagerfläche einstückig ist,
die zweite Plattenform (29) in der Nähe der Aussparung (23) angeordnet ist, und
die erste Plattenform (28) koplanar neben der zweiten Plattenform (29) angeordnet ist.

5. Blatt nach Anspruch 3, **dadurch gekennzeichnet, dass** der flexible Abschnitt (125) eine Mehrzahl von Querschnitten mit einer Dicke umfasst, die sich in Richtung der Spannweite des Blattes progressiv von einer minimalen Dicke e1' bis zu einer maximalen Dicke e2' (121) ändert.

6. Blatt nach einem der Ansprüche 1 bis 5, **dadurch gekennzeichnet, dass** der flexible Abschnitt (25, 26, 56, 125) symmetrisch auf beiden Seiten einer Mittelebene (45) für die Wurzelzone (2, 3) des Blattes (20, 21, 51, 121) angeordnet ist.

7. Blatt (20) nach Anspruch 6, **dadurch gekennzeichnet, dass** der flexible Abschnitt (25) mindestens lokal einen I-förmigen Querschnitt (36) aufweist und zwei Kanten (46, 47) aufweist, die symmetrische Vorsprünge auf beiden Seiten der Mittelebene (45) der Wurzelzone (2) der Schaufel (20) bilden.

8. Blatt (21, 51) nach Anspruch 6, **dadurch gekennzeichnet, dass** der flexible Abschnitt (26, 56) zumindest lokal einen rechteckigen Querschnitt (37, 57) aufweist, der symmetrisch zu der Mittelebene (45) der Wurzelzone (3) der Schaufel (21, 51) angeordnet ist.

9. Blatt nach einem der Ansprüche 1 bis 8, **dadurch gekennzeichnet, dass** mindestens die Wurzelzone (2, 3) der Schaufel (20, 21, 51, 121) aus mindestens einem Verbundmaterial gebildet ist, das aus der Gruppe ausgewählt ist, die Epoxidpolymere, Epoxidharze, mit Verstärkungsfasern versetzte Epoxidharze, in eine Epoxidmatrix eingebettete Textilmatten auf der Grundlage von Verstärkungsfasern und gewebte, gewirkte oder geflochtene und dann in eine Epoxidmatrix eingebettete Textilschichten auf der Grundlage von Verstärkungsfasern umfasst.

10. Blatt nach einem der Ansprüche 1 bis 9, **dadurch gekennzeichnet, dass** der starre Abschnitt (64) der Wurzelzone (3) des Blattes (20, 21, 51, 121) ein Roving-Band (38) beinhaltet, das in mindestens einem Material eingebettet ist, das ganz oder teilweise das Blatt (20, 21, 51, 121) bildet, wobei das Roving-Band (38) eine Schlaufe bildet, um mindestens einen Abschnitt des Umfangs (39) der Aussparung (23) des Blattes (20, 21, 51, 121) zu bilden, der einen gekrümmten Abschnitt (43) und zwei gerade Abschnitte (44) auf beiden Seiten der Aussparung (23) umfasst, wobei sich eine solche Schlaufe von der Aussparung (23) in den profilierten Bereich (30) des Blattes (20, 21, 51, 121) bis zu seinem freien Ende erstreckt.

11. Rotor (10, 11) für ein Drehflügelflugzeug (1), umfassend mindestens zwei monolithische Blätter (20, 21, 51, 121), eine Nabe (15) zum Drehantreiben der mindestens zwei Blätter (20, 21, 51, 121) um eine Drehachse (12) des Rotors (10), 11) und mindestens zwei geschichtete sphärische Anschläge (22), die jeweils eine kugelgelenkartige Verbindung zwischen jedem Blatt (20, 21, 21, 21, 21, 51, 121) und der Nabe (15) bilden, **dadurch gekennzeichnet, dass** die mindestens zwei Blätter (20, 21, 51, 121) nach einem der Ansprüche 1 bis 10 sind.

12. Rotor nach Anspruch 11, **dadurch gekennzeichnet, dass** der Rotor (10, 11) mindestens einen Zugdämpfer (16, 17) aufweist, der in einer eingesenkten Verbindung an der Nabe (15) befestigt ist, wobei jeder Finger (24) mit einem sphärischer Lagerfläche der mindestens zwei Blätter (20, 21, 51, 121) in einer ringförmigen linearen Verbindung mit einer zylindrischen Bohrung (14) in dem Zugdämpfer (16, 17) zusammenwirkt.

13. Rotor (10) nach Anspruch 12, **dadurch gekennzeichnet, dass** der mindestens eine Zugdämpfer (16) aus einer Vielzahl von getrennten Elementen (18) zusammengesetzt ist, die jeweils eine zylindrische Bohrung (14) aufweisen, die mit jedem Finger (24) mit sphärischer Lagerfläche der mindestens zwei Blätter (20, 21, 51, 121) zusammenwirkt.

14. Rotor (11) nach Anspruch 12, **dadurch gekennzeichnet, dass** der mindestens eine Zugdämpfer (17) durch einen monolithischen Ring (19) mit mindestens zwei zylindrischen Bohrungen (14) gebildet ist, die jeweils mit einem Finger (24) mit sphärischer Lagerfläche der mindestens zwei Blätter (20, 21, 51, 121) zusammenwirkt.

15. Rotor (10, 11) nach einem der Ansprüche 12 bis 14, **dadurch gekennzeichnet, dass** der mindestens eine Zugdämpfer (16, 17) vom geschichteten Typ ist.

16. Drehflügelflugzeug (1), **dadurch gekennzeichnet, dass** es einen Rotor (10) nach einem der Ansprüche 11 bis 15 umfasst.

## Claims

1. Monolithic blade (20, 21, 51, 121) of a rotor (10, 11) of a rotorcraft (1), said blade (20, 21, 51, 121) comprising:
- at least locally, a profiled region (30) comprising a pressure-side face (32) and a suction-side face (31),
- a root region (2, 3) comprising a recess (23) opening onto either side of a rigid portion (64) of the blade (20, 21, 51, 121) between a first face (34) and a second face (35) extending said suction-side face (31) and said pressure-side face (32), respectively, of said profiled region (30) towards a root end (33) of said blade (20, 21, 51, 121), said recess (23) being capable of receiving a spherical laminated stop (22),
**characterised in that** said root region (2, 3) of said blade (20, 21, 51, 121) comprises:
- a spherical bearing member (24) arranged at said root end (33) of said blade (20, 21, 51, 121), said member (24) being intended to cooperate with a cylindrical bore (14) along a linear annular connection, and
- a flexible portion (25, 26, 56, 125) having a preferred bending deformation direction along a flapping axis (40) of said blade (20, 21, 51, 121), said flexible portion (25, 26, 56, 125) being arranged between said member (24) and said recess (23) that is capable of receiving said spherical laminated stop (22).

2. Blade according to claim 1, **characterised in that** said recess (23) is arranged in a narrow part (27) of a chord of said blade (20, 21, 51, 121) in said root region (2, 3), said narrow part (27) corresponding to a reduction in the chord of said blade (20, 21, 51, 121) with respect to the chord of the profiled region (30) of said blade (20, 21, 51, 121).

3. Blade according to either of claims 1 to 2, **characterised in that** said flexible portion (25, 26, 125) is, in whole or in part, a plate-shaped part (28, 29, 128).

4. Blade according to claim 3, **characterised in that** said flexible portion (25, 26) has, in whole or in part, a first plate-shaped part (28) having a first predetermined thickness e1 and a second plate-shaped part (29) having a second predetermined thickness e2, said first plate-shaped part (28) being rigidly connected to said spherical bearing member (24), said second plate-shaped part (29) being arranged in the vicinity of said recess (23), said first plate-shaped part (28) being juxtaposed with said second plate-shaped part (29) in a coplanar manner.

5. Blade according to claim 3, **characterised in that** the flexible portion (125) has a plurality of cross sections having a thickness that gradually changes from a minimum thickness e1' to a maximum thickness e2' along the direction of the span of the blade (121).

6. Blade according to any of claims 1 to 5, **characterised in that** said flexible portion (25, 26, 56, 125) is arranged symmetrically on either side of a median plane (45) for said root region (2, 3) of said blade (20, 21, 51, 121).

7. Blade (20) according to claim 6, **characterised in that** said flexible portion (25) has, at least locally, an I-shaped cross section (36) and comprises two edges (46, 47) which form symmetrical protrusions on either side of said median plane (45) of said root region (2) of said blade (20).

8. Blade (21, 51) according to claim 6, **characterised in that** said flexible portion (26, 56) comprises, at least locally, a rectangular cross section (37, 57) arranged symmetrically with respect to said median plane (45) of said root region (3) of said blade (21, 51).

9. Blade according to any of claims 1 to 8, **characterised in that** at least said root region (2, 3) of said blade (20, 21, 51, 121) is formed of at least one composite material selected from the group comprising the epoxy polymers, epoxy resins, reinforcing-fibre-filled epoxy resins, textile mats based on reinforcing fibres and embedded in an epoxy matrix, and woven, knitted or braided textile fabrics based on reinforcing fibres and embedded in an epoxy matrix.

10. Blade according to any of claims 1 to 9, **characterised in that** said rigid portion (64) of the root region (3) of said blade (20, 21, 51, 121) comprises a roving belt (38) embedded inside at least one material that forms, in whole or in part, said blade (20, 21, 51, 121), said roving belt (38) forming a loop in order to form at least one portion of the periphery (39) of said recess (23) of said blade (20, 21, 51, 121), which periphery comprises a curved portion (43) and two rectilinear portions (44) on either side of the recess (23), a loop of this kind extending from said recess (23) in said profiled region (30) of said blade (20, 21, 51, 121) as far as the free end thereof.

11. Rotor (10, 11) of a rotorcraft (1) comprising at least two monolithic blades (20, 21, 51, 121), a hub (15) that enables said at least two blades (20, 21, 51, 121) to be rotated about an axis of rotation (12) of said rotor (10, 11), and at least two spherical laminated stops (22) that each respectively form a swivel connection between each blade (20, 21, 51, 121) and said hub (15), **characterised in that** said at least two blades (20, 21, 51, 121) are blades according to any of claims 1 to 10.

12. Rotor according to claim 11, **characterised in that** said rotor (10, 11) comprises at least one drag absorber (16, 17) that is rigidly connected to said hub (15) so as to be fitted therein, each spherical bearing member (24) of said at least two blades (20, 21, 51, 121) cooperating, along a linear annular connection, with a cylindrical bore (14) provided in said drag absorber (16, 17).

13. Rotor (10) according to claim 12, **characterised in that** said at least one drag absorber (16) consists of a plurality of disjoint members (18) each comprising a cylindrical bore (14) cooperating with each spherical bearing member (24) of said at least two blades (20, 21, 51, 121).

14. Rotor (11) according to claim 12, **characterised in that** said at least one drag absorber (17) is formed by a monolithic ring (19) comprising at least two cylindrical bores (14) which each respectively cooperate with a spherical bearing member (24) of said at least two blades (20, 21, 51, 121).

15. Rotor (10, 11) according to any of claims 12 to 14, **characterised in that** said at least one drag absorber (16, 17) is laminated.

16. Rotorcraft (1), **characterised in that** it comprises a rotor (10) according to any of claims 11 to 15.
